# EUROPEAN PATENT SPECIFICATION

(11) **EP 0 750 158 B1**
(45) Date of publication and mention of the grant of the patent: **01.12.2004**
(21) Application number: 95850118.1
(22) Date of filing: 22.06.1995
(51) Int. Cl.: F21V 8/00

(54) **Illumination devices and methods of forming same**
Beleuchtungsvorrichtung und Verfahren zu deren Herstellung
Dispositifs d'éclairage et méthodes pour leur fabrication

(43) Date of publication of application: 27.12.1996
(73) Proprietor: Johanson, Walter A., St. Paul, Minnesota 55101 (US)
(72) Inventor: Johanson, Walter A., St. Paul, Minnesota 55101 (US)
(74) Representative: Whitaker, Iain Mark

(56) References cited:
- EP-A- 0 125 558
- EP-A- 0 235 447
- EP-A- 0 236 030
- EP-A- 0 290 267
- DE-A- 3 804 732
- GB-A- 2 112 166
- US-A- 5 195 162

## Description

### Background of the Invention

The present invention relates to light conducting and light emitting tubes, herein referred to as "light tubes", and may use novel optical light films having an embossed prism pattern to contain and channel the light when formed into a tube. More particularly, the present invention is concerned with laminated tube construction and enables the constructing of light tubes to achieve a wide range of illumination effects including the piping of light from an accessible, concentrated light source to distal areas and the release of such light in widely variable patterns.

Optical light films (OLFs) can be efficiently manufactured from polymers in flat, flexible, but fragile films and made to perform a myriad of illumination functions. The film can be formed into various tubular and other partially closed configurations by supporting it together with supplemental light controlling films or elements in preformed carrier tubing having light-permeable characteristics. For example, a sheet of OLF can be formed into a closed tube by disposing one longitudinal edge of the OLF adjacent the opposite longitudinal edge. Alternatively, a sheet of OLF can also be formed into a partially closed tube, for example having an arched cross-section, and maintained in such a configuration with a supporting structure. As used herein, the term "tube" is used broadly to include both closed and partially closed configurations.

In addition to carrying light from a source of illumination such as a high-intensity light bulb to a remote location, light tubes can also be used for emitting light over relatively large areas. For this purpose, various methods have been devised to direct light out of a light tube over portions of the tube length. One method involves placing a clear adhesive tape on the outer, grooved side of an optical light film. A clear tape placed in this manner reduces the internal reflectance of the optical light film in the taped area and essentially creates a window for "escaping" light. Another method simply involves removing a section of the optical light film where internal reflectance is not desired. Portions of a tube lacking optical light film will permit light to escape. A third method comprises forming a light tube with some means for directing the light at the walls of the optical light film at an angle greater than about 28°. At such angles of incidence, the internal reflectance of the optical light film is greatly reduced. For example, the 3M Company of St. Paul, Minnesota, produces a product marketed under the name "X-70" which directs incident light at an angle of about 90° to the angle of incidence. If a piece of "X-70" is positioned within a light tube, light moving generally along the longitudinal axis of the tube will be directed through the "X-70" substantially perpendicular toward a sidewall and out of the light tube. Another product, marketed under the name "SCOTCH-CAL EXTRACTOR FILM ™" directs light toward and through an opposite interior wall.

European patent application EP 0,235,447A of the above-mentioned 3M Company describes and illustrates a range of structures of hollow tubular light conduits formed of optical light film and is characterised over in the claims hereinafter.

Since optical light film is fragile and sensitive to dirt and moisture, it is typically positioned within protective, outer tubes. Such tubes are generally transparent and can have a variety of finishes, e.g. clear, matte, colored or opaque. The ability to insert the fragile optical light films into a carrier tubing, typically an extrusion product, is an impediment to the light tube designer. Moreover, shipping fabricated light tubes is costly because of their high volume relative to volume of component displacement and their inherent vulnerability to damage by breaking and scratching. Thus the low manufacturing cost of the critical optical film component is heavily offset by shipping costs. Also lost is the ability of the designer to achieve at acceptable cost finished products which feature many of the useful and underlying lighting functions which the optical light film is inherently capable of performing.

It would therefore be desirable to provide novel methods for forming light tubes and light tube products using the films which are cost effective, optically efficient and functionally varied.

### Summary of the Invention

According to the present invention there is provided a light carrier comprising an inner sheet of optical light film comprising a surface with a plurality of substantially triangular grooves and first longitudinal film edge, characterized by:
a middle sheet comprising a first longitudinal edge portion and a second longitudinal edge portion;
an outer sheet comprising a first longitudinal edge and a second longitudinal edge;
means for maintaining a said inner sheet and said middle and outer sheets in a generally tubular configuration with said longitudinal edges of said outer sheet disposed in abutting relation.

Preferably the maintaining means comprises a first connector having at least one adhesive portion, said first connector connected to said inner sheet at a position remote from said first longitudinal film edge and to said middle sheet at a position remote from said first longitudinal edge portion thereby defining a slot;
a second connector having at least one adhesive portion, said second connector connected to said middle sheet at a position remote from said first longitudinal edge portion and to said outer sheet at a position proximate said first longitudinal edge; and
a third connector comprising at least one adhesive portion, said third connector disposed proximate said second longitudinal edge for maintaining said second longitudinal edge in abutting relation with said first longitudinal edge.

An embodiment of the present invention comprises an improved optical light carrier which advantageously directs controlled amounts of light to exit the light carrier with at least one laminated extractor.

Preferably a novel, heat resistant connector is used to provide a durable connection between light tubes or portions of light tubes, for example between an optical light film tube and a bulb housing.

These and other embodiments are described in further detail below.

### Brief Description of the Drawings

Figures 1 and 2 are partial, cross-sectional views of a preferred embodiment of light carrier of the present invention.
Figure 3 is a cross-sectional view of an illumination device in which the light tube of the preferred embodiment may be incorporated.
Figure 4 illustrates a tube-in-a-tube arrangement.
Figures 5 - 12 illustrate methods for disposing a light tube within a preformed carrier.
Figure 13 illustrates a plunger which is useful with the methods illustrated in Figures 5-12.

### Detailed Description

Unless otherwise specified, the term "optical light film" is used herein to refer to flexible films having a surface comprising a plurality of substantially triangular grooves which reflect substantially all of the light incident on the opposite side of the film at an angle of less than about 30° when formed into a light tube. Such film is available from the 3M Corporation, St. Paul, Minnesota, U.S.A.

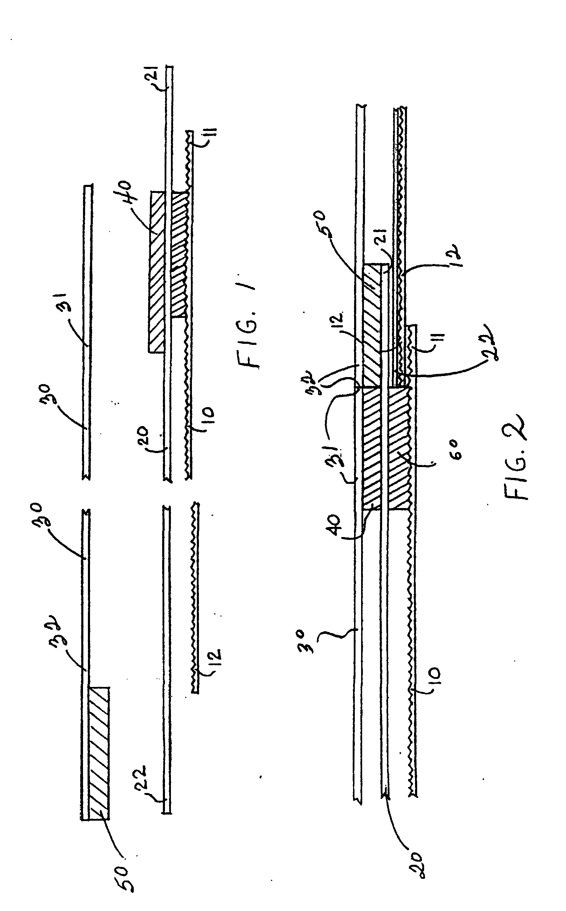

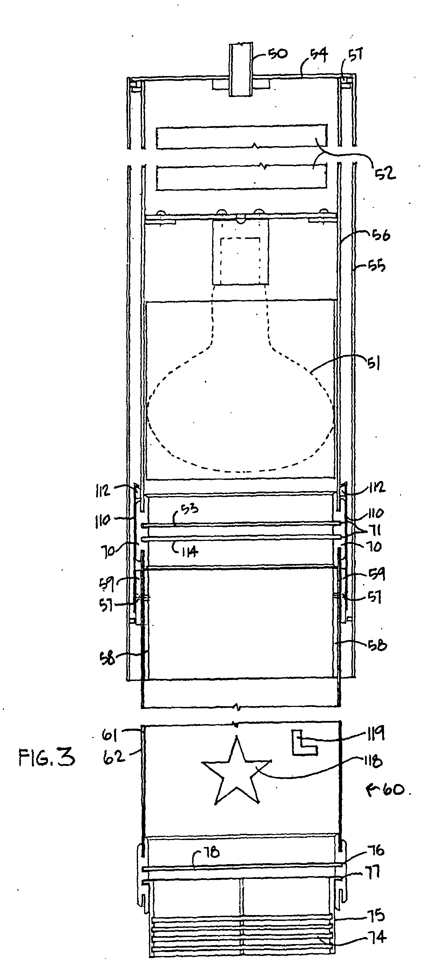

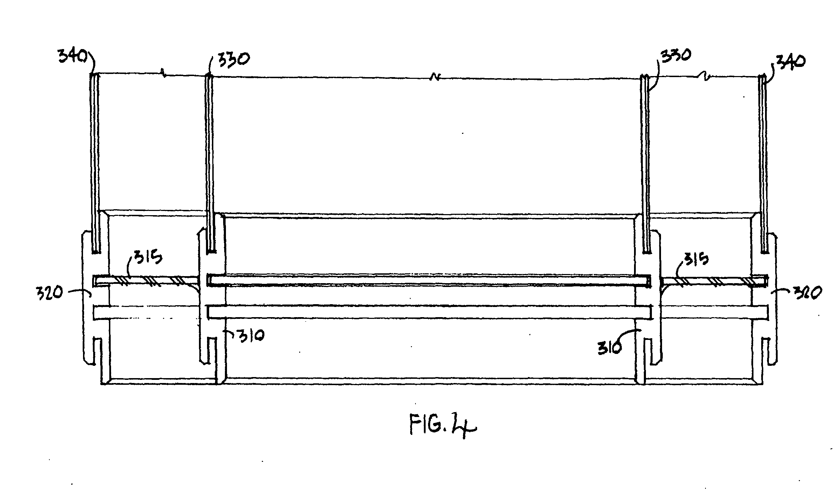

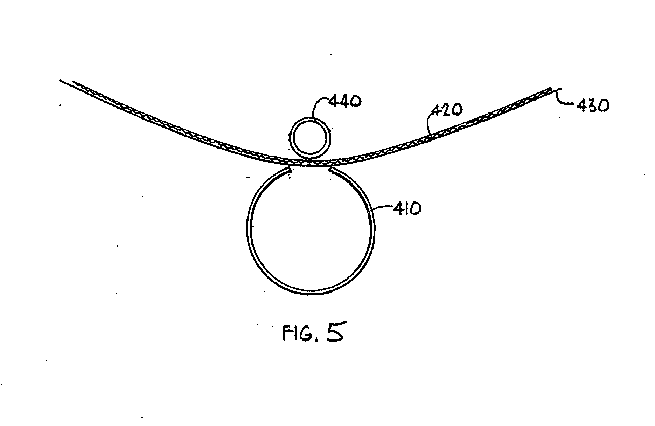

Referring to Figures 1 and 2, there is shown a light carrier comprising an optical light film disposed within two substantially transparent sheets. As illustrated in Figures 1 and 2, an optical light film 10 comprises a first edge region 11 and a second edge region 12. According to this illustrated embodiment, a connector 60 is advantageously positioned remote from edge 11 of optical light film 10 and contacts a transparent middle sheet 20 at a position remote from a first longitudinal edge 21 of the middle sheet 20. In this manner, connector 60 thereby forms a slot into which the opposite edge portion 12 of optical light film and/or longitudinal edge region 22 of middle sheet 20 may be inserted when the films are formed into a generally tube configuration, as illustrated in part in Fig.13. An outer sheet 30 comprises a first edge region 31 and a second edge region 32. The opposing longitudinal edge regions of the outer sheet 30 are positioned in abutting relation when the light carrier is formed. In order to effect this desired configuration, a second connector 40 is positioned on the outer surface of middle sheet 20 at a position remote from first longitudinal edge 21 and in alignment with edge region 31 of outer sheet 30. In this manner, the edges of connector 40 and first edge region 31 are most preferably aligned. A third connector 50 is advantageously disposed on the inner surface of the second edge region 32 of outer sheet 30 such that when the outer sheet 30 is formed into a generally tubular configuration, the third connector 50 connects the second edge region 32 of outer sheet 30 with the outer surface of first edge portion 21 of middle sheet 20. As shown in Fig.2, the edges of outer sheet 30 are advantageously disposed in abutting relation in order to provide a light carrier having a smooth outer surface.

While different types of connectors may be utilized without departing from the scope of this embodiment of the present invention, one preferable material for first connector 30 comprises a double-sided, opaque tape specifically designed to hold the outer grooves of optical light film 10 securely for extended periods of time.

Connectors 40 and 50 may comprise substantially transparent double-sided tapes. For example, the adhesive tape can by a Very High Bond Tape available from the 3M Corporation of St. Paul, Minnesota which exhibits adhesiveness throughout. Those skilled in the art will also appreciate that the thickness of the adhesive tape utilized can be varied for different applications depending upon such factors as the strength required and any thickness characteristics inherent in the particular tube design.

According to one preferred embodiment of the present invention, the middle film comprises Lexan® available from G.E. Plastics, Inc., U.S.A. having a matte/velvet finish, e.g. Model 8B35, which is a diffusing film. The outer sheet preferably comprises Lexan® and most preferably comprises enhanced ultraviolet stability for outdoor use. For example, Lexan® Model HP92W, also available from G. E. Plastics, U.S.A., offers desirable ultraviolet stability and abrasion resistance.

This embodiment of the present invention advantageously provides a light carrier having a smooth outer surface. Furthermore, the tubes of the present invention can be formed in a factory and shipped in a substantially flat configuration to a remote installation site. The illustrated light carriers can be advantageously formed quickly since the films and connectors can be positioned accurately without the need for custom tooling.

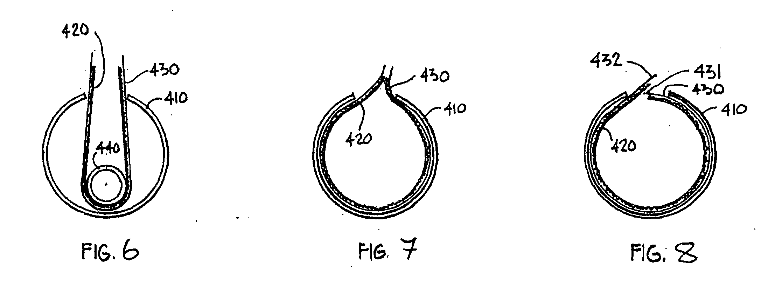

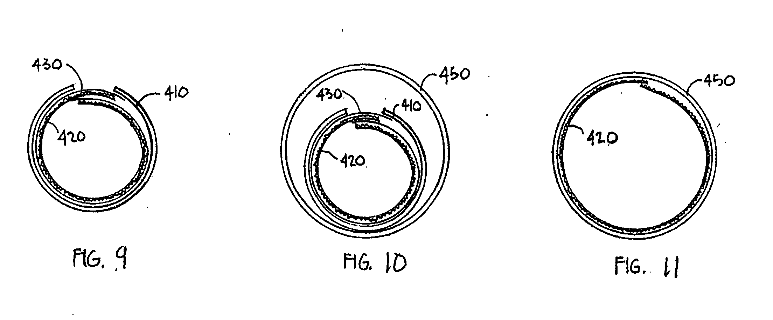

Tuming to Figures 3 and 4, these show a light fixture comprising a light source, preferably comprising a metal halide bulb 51, a ballast 52, a decorative light tube 60 and a light emitter 75. In this hanging light fixture, a support hanger 50 is suitably wired to a supply of electrical power and to ballast 52 which in turn powers bulb 51. Bulb 51 is preferably positioned within a protective housing.

As shown in Figure 3, the illustrated housing comprises outer sleeve 55 and an inner sleeve 56. Outer sleeve 55 is removeably connected to a top cover 54 by a twist connector 57. Outer sleeve 55 can therefore be readily removed by simply rotating outer sleeve 55 relative to top cover 54. Inner sleeve 56 is advantageously provided with sufficient openings to allow a person to change bulb 50 after outer sleeve 55 has been removed. Outer sleeve 55 can then be raised back into position and secured to upper support 54.

As shown in Figure 3, light tube 60 is suspended from inner sleeve 56. While those skilled in the art will appreciate that there are many suitable methods of connecting light tube 60 to inner wall 56, the illustrated arrangement utilizes a mechanical connection comprising screws 57 which pass through holes in clips 110 light tube 60. Clips 110 are suspended from flanges 112 which are connected, for example by welding, to inner wall 56. Clips 110 extended downwardly beyond retaining ring 70 and preferably overlap a portion of light tube 60. In order to provide greater support and reduce the likelihood of damage to the light tube 60, a substantially rigid support ring 58 is advantageously positioned inside the upper portion of light tube 60. The substantially rigid ring may be formed of any suitable material, for example, a metal such as polished aluminum. The fixture also comprises a spacer 59 in order to maintain the light tube 60 and inner protective wall 56 in a substantially-parallel spaced relation. Therefore, supporting screws 57 pass through holes in rigid support ring 58, light tube 60, spacer 59 and clips 110. Screws 57 do not contact outer protective sleeve 55 and therefore do not interfere with the movement of outer sleeve 55 when it is necessary to change a light bulb 51. In this manner, vertical support is provided to light tube 60 and light tube 60 is also substantially thermally insulated from the heat of bulb 51.

In order to obtain desired lighting effects, it may be desirable to position lenses, for example colored lenses, or light filters between bulb 51 and light tube 60. For this purpose, a retaining ring 70 is advantageously disposed below bulb 51. A lens 53 is maintained in a position substantially perpendicular to the longitudinal axis of the light tube with a retaining ring 70 formed of a heat resistant material. For example, the retaining ring 70 may be formed of a silicone compound, such as the "6750 silicon resin" sold by General Electric Company of Waterford, N.Y., which is sufficiently pliable to allow the retaining ring 70 to be positioned within the bulb housing and also to permit the placement of lenses. The illustrated retaining ring 70 is provided with two inwardly facing grooves 71 and two vertically disposed grooves 72, one opening upwardly and the other opening downwardly.

As illustrated in Figure 3, light tube 60 advantageously extends upwardly beyond the upper edge of rigid ring 58 into the lower slot 72 of lens retaining ring 70. A suitable heat-resistant adhesive may also be used within lower vertical groove 72 for bonding retaining ring 70 onto light tube 60. The mechanical connection performed by screws 57 provides support to retaining ring 70. Retaining ring 70 may also be used to support a clear Pyrex® lens. Pyrex® is particularly advantageous since it prevents some of the ultraviolet waves and heat emitted by a light source from harming the polymers used in this illumination device. It also keeps out dust and moisture. Retaining ring 70 may also be used to support a colored filer 114 in order to create desired illumination effect.

While those skilled in the art will appreciate that variations in the construction of the illustrated light tube 60 may be made without departing from the claimed scope of the present invention, for purposes of illustration of other features, the light tube shown in Figure 3 is here shown for convenience as simply comprising an inner sheet of optical light film 61 and an outer sheet 66 of a protective polymeric material. The amount of light exiting through the side walls of the light tube can be varied through the use of extractors described above and/or interruptions in the optical light film. Figure 3 illustrates an extractor 118 formed into the shape of a star and a relieved section 119 wherein the optical light film has been removed in order to interrupt the internal reflectance in these areas.

The direction of light exiting the bottom of the light tube may be controlled by a light emitter. Light emitter may be of a wide variety of designs depending on the desired illumination.

Those skilled in the art will also appreciate that the decorative aspects of the light tubes illustrated in Figure 3 can be varied through the use of colored filters or colored protective polymeric films or tubes.

Another preferred feature in embodiments of the present invention comprises some manner of extracting light out of those illumination devices in the region of the optical light film. For example, one of the extractors described above may be utilized. Alternatively, the OLF can be provided with a relieved section 119, preferably in the form of some decorative shape. From the present description, it will be appreciated that by removing a portion of the optical light film, the internal reflectance at such portions of the illumination device is eliminated. Various shapes and letters can be cut from the optical light film or an extractor 89 can be employed in the manners illustrated in Figure 3.

From the present description, it will be appreciated that rings, such as the heat resistant retaining rings described above, will have many uses in illumination devices. Rings constructed in the fashion illustrated in Figure 3 may also be utilized to form other useful illumination devices.

Figure 4 illustrates a still further use for the illustrated rings wherein a tube-in-a-tube construction is formed using an inner retaining ring 310 which is positioned inside an outer retaining ring 320 having a larger diameter. In the manner illustrated in Figure 4 the inner retaining ring 310 is positioned by a spacer ring 315 which is held in place by an inwardly facing groove of outer retaining ring 320. The spacer ring 315 can be formed of any substantially rigid material, for example a metal or a plastic The spacer ring 315 is most preferably heat resistant. This tube-in-a-tube construction is particularly useful for providing a protective casing 340 for a light tube 330 and/or providing a colored or finished cover to create a desired light effect. Casing 340 can advantageously comprise a plurality of layers.

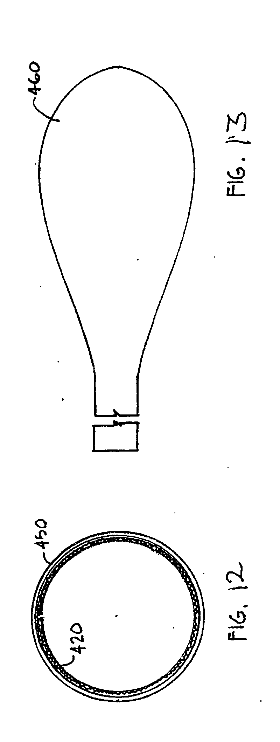

Another aspect of the present disclosure comprises methods of forming light tubes within pre-formed carriers, for example polycarbonate tubes. From the description below, those skilled in the art will appreciate that the methods described herein may also be utilized to form light tubes in carriers that are not circular in cross-section. One method of forming light tubes within a cylindrical carrier is illustrated in Figures 5-12. These methods are particularly useful in forming light tubes within pre-formed cylindrical tubes. For example, light tubes having a diameter of 10 centimeters (4 inches) can be readily formed in lengths of 6 meters (20 feet).

With reference to Figure 5, the first step comprises providing a gutter 410 preferably having a length equal to the length of the final light tube and a longitudinal relieved section defined by opposing side walls of gutter 410 through which an optical light film can be inserted. From the description above, it will be appreciated that in order to conduct light, optical light films used with the various embodiments of the present invention have a plurality of prismatic grooves/peaks which face outwardly when the optical light film is formed into a light tube. In order to prevent these peaks/grooves from being damaged along the edges of gutter 410, a protective sheet 430 is advantageously placed between the optical light film and the gutter 410. The protective sheet 430 is preferably formed of a material which is pliable and has a substantially low coefficient of friction with the other elements utilized during this assembly procedure. For example, when the gutter 410 is formed of a polycarbonate, protective sheet 430 may be formed of a material such as Tyvek™ sold by DuPont of Wilmington, DE.

With the protective sheet 430 in place, the optical light film 420 can then be pushed into gutter 410 with the help of a weighted rod 440 in the manner shown in Figure 6. The heavy rod 440 is then removed and the optical light film 420 and protective sheet 430 can be adjusted inwardly to correspond with the general shape of gutter 410 in the manner shown in Figure 7. The lower edge 431 of protective sheet 430 is then folded under the upper edge 432 in the manner illustrated in Figure 8 and then the upper edge 432 is also folded inwardly such that the entire optical light film 420 and protective sheet 430 are disposed within gutter 410 in the manner shown in Figure 9. Since gutter 410 has a diameter less then the diameter of the tube 450 into which the optical light film will be ultimately disposed, gutter 410 is then simply inserted into an open end of tube 450.

The optical light film 420 is then attached, e.g. clamped, to the end of outer tube 450 and the gutter 410 and protective sheet 430 are removed from the other end, leaving optical light film 420 within outer tube 450 in the manner shown in Figure 11. If the optical light film, due to its inherent resiliency and elasticity, does not conform to the inner surface of outer tube 450, a plunger 460, for example having a cross-section such as the one shown in Figure 11, can be pushed into the interior of optical light film 420 forcing the optical light film 420 outwardly such that the opposing edges of optical light film 420 snap into position as shown in Figure 10.

In an alternative method for installing an optical light film into a closed rigid tube, the steps illustrated in Figures 3-7 are repeated. The longitudinal recess of the gutter 410 may optionally be blocked to prevent the optical light film 420 and protective sheet 430 from working their way out of gutter 410. In this method, one end of gutter 410 is then aligned with an open end of outer tube 450, a flexible lead is fed through outer tube 450 and attached to protective sheet 430 and optical light film 420. The protective sheet 430 and optical light film 420 are then drawn out the open end of gutter 410, which is maintained substantially outside of outer tube 450, and into outer tube 450.

The protective sheet 430 is preferably a flexible material having a low coefficient of friction and is substantially tear-resistant such that it will not tear upon contact with the edges of the gutter 410. While any low friction, tear-resistant material can be utilized, the material which has been found useful is Tyvek™ made by DuPont, of Wilmington, Delaware.

The protective sheet 430 can then be readily removed in the manner described above by clamping one end of the optical light film 420 to the outer tube 450 and drawing the protective carrier 430 out the other end. If the optical film 420 did not conform to the inner surface of tube 450, for example as shown in Figure 11, the plunger 460 illustrated in Figure 13 can again be utilized in the manner described above.

Unlike methods heretofore described and utilized in the art, the methods described above provide for ways of positioning optical light film within rigid tubes with a minimal amount of manpower. Previous methods which required the rolling of a sheet of optical light film within an outer protective, low-friction sheet required numerous pairs of hands, and were therefore cost-intensive. Another disadvantage of such methods was that the rolled-up light film and protective sheet would tend to unroll and would become very difficult to push into the outer tube. Another disadvantage is that the fragile optical light film cannot withstand too much pushing before fracturing. The methods of the present disclosure advantageously minimize the amount of stress placed on the fragile optical light film.

Another aspect of the present disclosure comprises a method of disposing an extractor in a light tube proximate an optical light film in a neat, efficient manner. This method is particularly useful with extractors which reflect incident light at a variety of different angles. For example, a product marketed under the name SCOTCHCAL™ sold by the 3M Company of St. Paul, Minnesota is one such extractor. Typically such extractors are installed using a coating of water to facilitate the positioning of the extractor on the surface to which the extractor will be attached. Those skilled in the art will appreciate that wetting an optical light film can be detrimental to the internal-reflectance properties of the film and should, whenever possible be avoided. This method therefore comprises first connecting the extractor to a thin film and then disposing the extractor/thin film laminate onto the configured sheet of optical light film. Those skilled in the art will appreciate that this avoids the need for working with water in the presence of the optical light film and the inherent risks of wetting the grooves of the optical light film.

## Claims

1. A light carrier comprising an inner-sheet of optical light film (10) comprising a surface with a plurality of substantially triangular grooves and first longitudinal film edge (11), **characterized by**:
a middle sheet (20) comprising a first longitudinal edge portion (21) and a second longitudinal edge portion (22);
an outer sheet (30) comprising a first longitudinal edge (31) and a second longitudinal edge (32);
means (40, 50) for maintaining a said inner sheet and said middle and outer sheets in a generally tubular configuration with said longitudinal edges of said outer sheet (30) disposed in abutting relation.

2. A light carrier according to claim 1 wherein said maintaining means comprises:
a first connector(60) having at least one adhesive portion, said first connector connected to said inner sheet (10) at a position remote from said first longitudinal film edge (11) and to said middle sheet (20) at a position remote from said first longitudinal edge portion 21 thereby defining a slot;
a second connector (40) having at least one adhesive portion, said second connector connected to said middle sheet (20) at a position remote from said first longitudinal edge portion (21) and to said outer sheet (30) at a position proximate said first longitudinal edge (31); and
a third connector (50) comprising at least one adhesive portion, said third connector (50) disposed proximate said second longitudinal edge (32) for maintaining said second longitudinal edge (32) in abutting relation with said first longitudinal edge (31).

3. A light carrier according to claim 2 wherein at least one of said connectors (40, 50, 60) comprises a double-sided tape.

4. A light carrier according to claim 2 wherein said first connector (60) comprises an opaque double-sided tape and said second connector (40) or said third connector (50) comprises clear double-sided tapes.

5. A light carrier according to claim 2, wherein said middle sheet (20) is a transparent diffusing film.

6. A light carrier according to claim 2, wherein said outer sheet (30) is a transparent film comprising enhanced ultraviolet stability.

7. A light carrier according to claim 6, wherein said outer sheet (30) is provided with a coating which provides enhanced ultraviolet stability.

## Patentansprüche

1. Lichtträger, der eine innere Schicht aus Lichtleitfolie (10) aufweist, die eine Oberfläche mit einer Vielzahl von im wesentlichen dreieckigen Nuten und einen ersten Längsfolienrand (11) aufweist, **gekennzeichnet durch**:
eine mittlere Schicht (20), die einen ersten Längsrandabschnitt (21) und einen zweiten Längsrandabschnitt (22) aufweist,
eine äußere Schicht (30), die einen ersten Längsrand (31) und einen zweiten Längsrand (32) aufweist;
eine Einrichtung (40, 50) für das Halten der inneren Schicht und der mittleren und der äußeren Schicht in einer im allgemeinen rohrförmigen Konfiguration, wobei die Längsränder der äußeren Schicht (30) in einer anstoßenden Beziehung angeordnet sind.

2. Lichtträger nach Anspruch 1, bei dem die Halteeinrichtung aufweist:
einen ersten Verbinder (60) mit mindestens einem adhäsiven Abschnitt, wobei der erste Verbinder mit der inneren Schicht (10) in einer Position, die vom ersten Längsfolienrand (11) abgelegen ist, und mit der mittleren Schicht (20) in einer Position verbunden ist, die vom ersten Längsrandabschnitt (21) abgelegen ist, wodurch ein Schlitz definiert wird;
einen zweiten Verbinder (40) mit mindestens einem adhäsiven Abschnitt, wobei der zweite Verbinder mit der mittleren Schicht (20) in einer Position, die vom ersten Längsrandabschnitt (21) abgelegen ist, und der äußeren Schicht (30) in einer Position verbunden ist, die dem ersten Längsrand (31) nahe gelegen ist; und
einen dritten Verbinder (50), der mindestens einen adhäsiven Abschnitt aufweist, wobei der dritte Verbinder (50) nahe dem zweiten Längsrand (32) für das Halten des zweiten Längsrandes (32) in einer anstoßenden Beziehung zum ersten Längsrand (31) angeordnet ist.

3. Lichtträger nach Anspruch 2, bei dem mindestens einer der Verbinder (40, 50, 60) ein zweiseitiges Band aufweist.

4. Lichtträger nach Anspruch 2, bei dem der erste Verbinder (60) ein undurchlässiges zweiseitiges Band aufweist und der zweite Verbinder (40) oder der dritte Verbinder (50) durchsichtige zweiseitige Bänder aufweist.

5. Lichtträger nach Anspruch 2, bei dem die mittlere Schicht (20) eine lichtdurchlässige Diffusionsfolie ist.

6. Lichtträger nach Anspruch 2, bei dem die äußere Schicht (30) eine lichtdurchlässige Folie ist, die eine verbesserte Ultraviolettbeständigkeit aufweist.

7. Lichtträger nach Anspruch 6, bei dem die äußere Schicht (30) mit einer Beschichtung versehen ist, die eine verbesserte Ultraviolettbeständigkeit liefert.

## Revendications

1. Support de lumière comprenant une feuille interne d'un film de lumière optique (10) comprenant une surface avec plusieurs rainures pratiquement triangulaires et un premier bord de film longitudinal (11), **caractérisé par**:
une feuille médiane (20) comprenant une première partie de bordure longitudinale (21) et une deuxième partie de bordure longitudinale (22);
une feuille externe (30) comprenant un premier bord longitudinal (31) et un deuxième bord longitudinal (32);
un moyen (40, 50) pour retenir une dite feuille interne et lesdites feuilles médiane et externe dans une configuration généralement tubulaire, lesdits bords longitudinaux de ladite feuille externe (30) butant les uns contre les autres.

2. Support de lumière selon la revendication 1, dans lequel ledit moyen de retenue comprend:
un premier connecteur (60) comportant au moins une partie adhésive, ledit premier connecteur étant connecté à ladite feuille interne (10) au niveau d'une position éloignée dudit premier bord de film longitudinal (11) et à ladite feuille médiane (20) au niveau d'une position éloignée de ladite première partie de bordure longitudinale (21), définissant ainsi une fente;
un deuxième connecteur (40) comportant au moins une partie adhésive, ledit deuxième connecteur étant connecté à ladite feuille médiane (20) au niveau d'une position éloignée de ladite première partie de bordure longitudinale (21) et à ladite, feuille externe (30) au niveau d'une position proche dudit premier bord longitudinal (31); et
un troisième connecteur (50) comprenant au moins une partie adhésive, ledit troisième connecteur (50) étant agencé près dudit deuxième bord longitudinal (32) pour maintenir la butée entre ledit deuxième bord longitudinal et ledit premier bord longitudinal (31).

3. Support de lumière selon la revendication 3, dans lequel au moins un desdits connecteurs (40, 50, 60) comprend un ruban double face.

4. Support de lumière selon la revendication 2, dans lequel ledit premier connecteur (60) comprend un ruban double face opaque, ledit deuxième connecteur (40) ou ledit troisième connecteur (50) comprenant un ruban double face transparent.

5. Support de lumière selon la revendication 2, dans lequel ladite feuille médiane (20) est constituée par un film de diffusion transparent.

6. Support de lumière selon la revendication 2, dans lequel ladite feuille externe (30) est constituée par un film transparent présentant une stabilité améliorée aux ultraviolets.

7. Support de lumière selon la revendication 6, dans lequel ladite feuille externe (30) comporte un revêtement assurant une stabilité améliorée aux ultraviolets.
